# EUROPÄISCHE PATENTANMELDUNG

(11) **EP 4 246 014 A2**
(43) Veröffentlichungstag der Anmeldung: **20.09.2023**
(21) Anmeldenummer: 23185453.0
(22) Anmeldetag: 12.07.2021
(51) Int. Cl.: F16H 37/08

(54) **GETRIEBESYSTEM**

(30) Priorität: 29.07.2020 DE 102020119984
(62) Teilanmeldung aus: 21184936.9
(71) Anmelder: Deere & Company, Moline, IL 61265 (US)
(72) Erfinder: Lang, Matthias, Mannheim (DE); Mueller, David, Mannheim (DE); Gugel, Rainer, Mannheim (DE)
(74) Vertreter: Stein, Stefan

(57) **Zusammenfassung**

Die Erfindung betrifft ein Getriebesystem (10) geeignet für Betrieb mit einer Antriebsmaschine, aufweisend eine Eingangswelle (12) für die Antriebsleitung, wenigstens eine Ausgangswelle (14) für die Abgabe an einen Antrieb, einen leistungsverzweigten Getriebeabschnitt (20), ein Schaltgetriebe (30), eine Getriebesystemsteuerung (40), wobei der leistungsverzweigte Getriebeabschnitt (20) wenigstens einen variablen Getriebezweig (22) und einen mechanischen Getriebezweig (24) aufweist, und der variable Getriebezweig (22) eingangs- und ausgangsseitig jeweils wenigstens eine erste und zweite Elektromaschine (16, 18) für den Generator und Motorbetrieb aufweist, die elektrisch miteinander verbunden sind, wobei die Antriebsleistung durch den mechanischen und variablen Getriebezweig (22, 24) aufgeteilt und geleitet wird, und mit einer eingangsgekoppelten magnetisch elektrischen Umlaufgetriebestufe (50), die den variablen Getriebezweig (22) und mechanischen Getriebezweig (24) zusammenführt, mit einem inneren Rotor (52), einem äußeren Stator (54) und einem modulierenden Ring (56), und die magnetisch elektrische Umlaufgetriebestufe (50) derart von der zweiten Elektromaschine (18) ansteuerbar ist, dass die Ausgangswelle (14) des Getriebesystems (10) entgegen der Drehrichtung an einer Eingangswelle (12) rotiert, wodurch ein Vorwärts- und Rückwärtsbetrieb des Getriebesystems (10) durchführbar ist.

## Beschreibung

Die vorliegende Erfindung betrifft ein Getriebesystem für eine landwirtschaftliche Maschine.

Ein Getriebesystem besteht üblicherweise aus einer Eingangswelle, einem schaltbaren Getriebe und einer Ausgangswelle. Getriebesysteme verändern die eingeleitete Antriebsleistung in Drehmoment und Drehzahl und leiten diese an den Abtrieb weiter.

Ein Getriebesystem kann Schaltgetriebe oder Stufenlosgetriebe als Komponenten verwenden. Schaltgetriebe werden durch lastschaltbare Kupplungen realisiert, die unterschiedliche, im Eingriff stehende Zahnradstufen miteinander verbinden. Dieser Schaltzeitpunkt, auch Lastschaltpunkt genannt, führt zu einer Geschwindigkeitsänderung der im Eingriff stehenden Getriebesystemkomponenten, zu Geräuschentwicklung, Verschleiß und einem unterbrochene Leistungsfluss.

Das Getriebesystem kann alternativ als Stufenlosgetriebe umgesetzt werden. Dies ist mittels hydraulischer Variatoren realisiert, um höhere Antriebsleistung sicher umwandeln zu können. Hierbei wird eingangsseitig des Stufenlosgetriebes mittels Hydrostaten ein Teil der Antriebsleistung in hydraulische Leistung umgewandelt. Mittels der Variatoren kann der Anteil der hydraulischen Leistung variiert werden. Ausgangsseitig wird die hydraulische Energie wieder in mechanische Energie umgewandelt. Meist haben Stufenlosgetriebe eine Ausgangswelle, um den Aufbau zu vereinfachen. Dies erfordert zum Schaltzeitpunkt des Getriebesystems gleichzeitig mit dem Gangwechsel im nachgeschalteten Getriebe eine Drehzahländerung an der Variatorausgangswelle. Dieser Vorgang beansprucht Zeit, die den Schaltvorgang verlangsamt und zu einer Trägheit des Getriebesystems führt.

Als Möglichkeit kann das Getriebesystem mit einem Stufenlosgetriebe mit zwei Variatorausgangswellen ausgestattet sein. Hierbei kann auf einen gleichzeitigen Drehzahlwechsel mit dem Schaltvorgang verzichtet werden. Diese Art von Aufbau für zu einer gesteigerten Komplexität, bedingt durch den zweiten Variatorausgang zusammen mit höhere Bauteileanzahl. Insgesamt weisen solche Getriebesysteme einen erhöhten Wartungsaufwand auf, zusammen mit einem erhöhten Verschleiß und stärkerer Geräuschentwicklung.

Die vorliegende Erfindung stellt ein Getriebesystem zur Verfügung, dass die angesprochenen Probleme überwindet.

Das erfindungsgemäße Getriebesystem ist geeignet für Betrieb mit einer Antriebsmaschine, und weist eine Eingangswelle für die Antriebsleitung auf, wenigstens eine Ausgangswelle für die Abgabe an einen Antrieb, einen leistungsverzweigten Getriebeabschnitt, ein Schaltgetriebe, eine Getriebesystemsteuerung, wobei der leistungsverzweigte Getriebeabschnitt wenigstens einen variablen Getriebezweig und einen mechanischen Getriebezweig aufweist, und der variable Zweig eingangs- und ausgangsseitig jeweils wenigstens eine Elektromaschine für den Generator und Motorbetrieb aufweist, die elektrisch miteinander verbunden sind, wobei die Antriebsleistung durch den mechanischen und variablen Zweig aufgeteilt und geleitet wird, und mit einer eingangsgekoppelten magnetisch elektrischen Umlaufgetriebestufe, die den variablen Zweig und mechanischen Zweig zusammenführt, mit einem inneren Rotor, einem äußeren Stator und einem modulierenden Ring, und die magnetisch elektrische Umlaufgetriebestufe derart von der zweiten Elektromaschine ansteuerbar ist, dass die Ausgangswelle des Getriebesystems entgegen der Drehrichtung an einer Eingangswelle rotiert, wodurch ein Vorwärts- und Rückwärtsbetrieb des Getriebesystems durchführbar ist.

Bei dem erfindungsgemäßen Getriebesystem und der Verwendung von Elektromaschinen im variablen Zweig zusammen mit einer magnetisch elektrischen Umlaufgetriebestufe, wird im Schaltpunkt des Getriebes gleichzeitig die Erregerfrequenz in den Statorwicklungen der magnetisch elektrischen Umlaufgetriebestufe umgeschaltet. Durch diese Schaltung findet eine Veränderung der Drehzahl einer Zwischenwelle statt. Hierbei wird jedoch nur ein geringes Drehmoment benötigt, so dass ein schnellerer Schaltvorgang des Getriebesystems ermöglicht wird im Vergleich zum Stand der Technik. Die Schaltvorgänge reduzieren damit den Koordinierungsaufwand der Bedienperson und verkürzen die Dauer des Schaltvorgangs. Hierbei wird das Fahrzeug geringeren Geschwindigkeitsschwankungen ausgesetzt, so dass ein erhöhter Fahrkomfort sichergestellt wird.

In einer weiteren Ausführung wird die magnetisch elektrische Umlaufgetriebestufe derart von der zweiten Elektromaschine angesteuert, dass eine Ausgangswelle der magnetisch elektrischen Umlaufgetriebestufe in Gegenrichtung zur Eingangswelle des Getriebesystems rotiert.

Die Ansteuerung der magnetisch elektrischen Umlaufgetriebestufe ermöglicht eine Überlagerung der Drehzahl und Richtung der Eingangswelle mit einem Ausgang der magnetisch elektrischen Umlaufgetriebestufe, so dass eine resultierende Ausgangsdrehzahl und Drehrichtung der Ausgangswelle entgegengesetzt zur Eingangswelle eingestellt wird. Ein zusätzlicher Rückwärtsgang kann entfallen und der gesamte Aufbau des Getriebesystems wird vereinfacht, wodurch die benötigte Teileanzahl und entsprechende Herstellungs- und Einbauvorgänge reduziert werden.

Bei einer weiteren Ausbildung ist ein zusätzliches Modul zur Drehrichtungsumkehr zwischen der ersten Elektromaschine und der magnetisch elektrischen Umlaufgetriebestufe im Leistungsfluss vorgesehen.

Das Modul zur Drehrichtungsumkehr kann separat ausgeführt werden vom Schaltgetriebe. Damit wird die Komplexität reduziert. Das Modul kann für ein geringeres Drehmoment ausgelegt werden, wodurch Produktionsaufwand und Teilegewicht reduziert wird.

Bei einer Weiterbildung ist ein Gang des Schaltgetriebes ein zusätzlicher Rückwärtsgang.

Mit der Integration des Rückwärtsgangs in das Schaltgetriebe wird die Kompatibilität zu gewöhnlichen Schaltgetrieben hergestellt. Der notwendige Bauraum für den leistungsverzweigten Getriebeabschnitt wird reduziert.

In einer Ausführung ist ein zusätzliches Modul zur Drehrichtungsumkehr zwischen der magnetisch elektrischen Umlaufgetriebestufe und dem Schaltgetriebe im Leistungsfluss vorgesehen.

Die separate Anordnung erleichtert die Zugänglichkeit des Moduls zu Instandhaltungszwecken.

Bei einer Weiterbildung ist ein zusätzliches Modul zum seriell elektrischen Anfahren im Leistungsfluss vorgesehen.

Das Modul ermöglicht das Anfahren des Fahrzeugs durch den elektrischen Leistungszweig, der dem Leistungsfluss über die zwei Elektromaschinen entspricht bei gleichzeitiger Abschaltung des mechanischen Leistungszweigs. Durch das rein elektrische Anfahren kann ein hohes Drehmoment an den Abtrieb geleitet werden. Dies ist besonders bei Anfahren mit einem hohen Zugmoment des Fahrzeuges von Vorteil, da hier bei geringer Fahrgeschwindigkeit hohe Zugkräfte aufgebracht werden müssen. Mittels des Moduls ist dies sichergestellt.

In einer Ausführung ist das Modul zum seriell elektrischen Anfahren zwischen der Eingangswelle des Getriebesystems und der magnetisch elektrischen Umlaufgetriebestufe im Leistungsfluss vorgesehen.

Aufgrund des Moduls findet eine mechanische Entkopplung des primären Antriebs vom Abtrieb des Fahrzeugs statt. Die Antriebsleistung wird in elektrische Leistung umgewandelt und an den Abtrieb geleitet. Durch das Vorsehen im Leistungsfluss vor der magnetisch elektrischen Umlaufgetriebestufe kann das Modul innerhalb des leistungsverzweigten Getriebeabschnitts angeordnet werden. Die Elektromaschinen können hier für die Umwandlung und Abgabe verwendet werden.

Bei einer Ausbildung ist das Modul zum seriell elektrischen Anfahren im Leistungsfluss zwischen der ersten Elektromaschine und der magnetisch elektrischen Umlaufgetriebestufe vorgesehen.

Durch das Vorsehen im Leistungsfluss vor der magnetisch elektrischen Umlaufgetriebestufe kann das Modul innerhalb des leistungsverzweigten Getriebeabschnitts angeordnet werden. Die Elektromaschinen können hier für die Umwandlung und Abgabe verwendet werden.

In einer Weiterbildung ist das Modul zum seriell elektrischen Anfahren im Leistungsfluss zwischen dem Modul zur Drehrichtungsumkehr und der magnetisch elektrischen Umlaufgetriebestufe vorgesehen.

Die Erfindung wird weiterhin anhand der folgenden Figuren beschrieben. Dabei zeigt:
Fig. 1 einen Aufbau des erfindungsgemäßen Getriebesystems;
Fig. 2 einen Aufbau aus dem Stand der Technik;
Fig. 3 einen weiteren Aufbau des erfindungsgemäßen Getriebesystems;
Fig. 4 einen weiteren schematischen Aufbau des Getriebesystems;
Fig. 5 einen weiteren schematischen Aufbau des Getriebesystems;
Fig. 6 einen weiteren schematischen Aufbau des Getriebesystems;
Fig. 7 einen weiteren schematischen Aufbau des Getriebesystems;
Fig. 8 einen weiteren schematischen Aufbau des Getriebesystems;
Fig. 9 einen weiteren schematischen Aufbau des Getriebesystems;
Fig. 10 einen weiteren schematischen Aufbau des Getriebesystems;
Fig. 11 einen weiteren schematischen Aufbau des Getriebesystems;
Fig. 12 einen weiteren schematischen Aufbau des Getriebesystems.

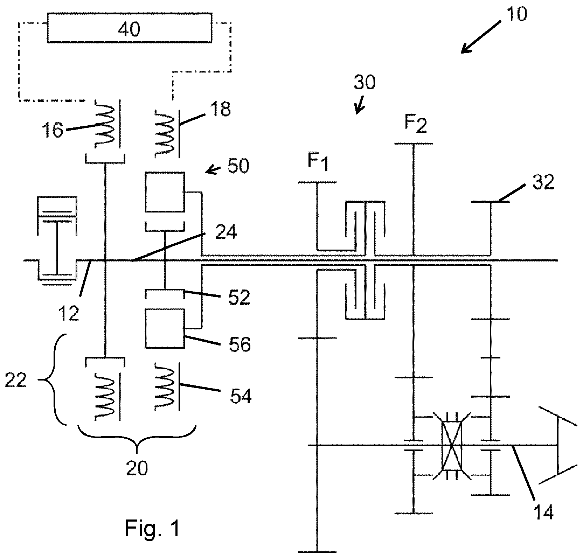

In Figur 1 ist eine Ausführung des Getriebesystems 10 dargestellt. Von einem Antrieb, meist ein Verbrennungsmotor, wird Antriebsleistung auf eine Eingangswelle 12 übertragen. Die Antriebsmaschine kann jedoch auch ein hydraulischer Motor sein. Mit der Eingangswelle 12 ist drehfest ein Rotor der eingangsseitigen Elektromaschine verbunden, sowie der innere Rotor 52 der magnetisch elektrischen Umlaufgetriebestufe 50. Die Eingangswelle dient gleichzeitig der Versorgung von Antriebsleistung für eine Zapfwelle oder PTO und ist als durchgehende Welle ausgeführt.

Die eingangsseitige Elektromaschine 16 ist elektrisch mit der ausgangsseitigen Elektromaschine 18 verbunden und mit einer Getriebesystemsteuerung 40. Die ausgangsseitigen Elektromaschine 18 ist in Wirkverbindung mit dem modulierenden Ring 56 der magnetisch elektrischen Umlaufgetriebestufe 50, welcher wiederrum mit dem inneren Rotor 52 zusammenwirkt. Die eingangsseitige und ausgangsseitige Elektromaschine stellt zusammen mit der magnetisch elektrischen Umlaufgetriebestufe den variablen Getriebezweig 24 dar, und zusammen mit der Eingangswelle den leistungsverzweigten Getriebeabschnitt 20. Der mechanische Getriebezweig 24 wird aus der durchgehenden Eingangswelle 12 gebildet.

Im Leistungsfluss daran anschließend ist der modulierende Ring 56 mittels einer Hohlwelle verbunden, welche die Eingangswelle 12 umgibt. Die Hohlwelle ist in Verbindung mit dem Schaltgetriebe 30 und mittels einer Lastschaltkupplung mit einem ersten Zahnradpaar F1 oder einem weiteren Zahnradpaar F2 verbindbar ausgeführt. Die Zahnradpaare F1 und F2 bilden das Schaltgetriebe 30 des Getriebesystems 10. Die Zahnradpaare F1 und F2 übertragen die Antriebsleistung auf die Ausgangswelle 14, welche wiederrum zur Weiterleitung an den Abtrieb dient. Das zweite Zahnradpaar F2 ist nicht drehfest mit der Ausgangswelle 14 verbunden, sondern wird über ein Kopplungselement durch Schalten drehfest mit dieser verbunden. Das erste Zahnradpaar F1 ist drehfest mit der Ausgangswelle 14 verbunden, so dass bei einem Freilauf des Kopplungselements und bei entsprechender Stellung der Lastschaltkupplung im Schaltgetriebe das Antriebsmoment über das erste Zahnradpaar F1 geleitet wird.

Mit dem zweiten Zahnradpaar F2 kann ein weiteres Zahnradpaar R für einen Rückwärtsgang verbunden sein. Mittels einer zusätzlichen Zwischenwelle zwischen der Eingangswelle 12 und der Ausgangswelle 14 erfolgt die Drehrichtungsumkehr. Auf der Ausgangswelle ist das Zahnradpaar R nicht drehfest mit der Ausgangswelle 14 verbunden und wird mittels des Kopplungselements geschaltet. Es ist somit je nach Stellung des Kopplungselements und der Lastschaltkupplung das erste Zahnradpaar F1, das zweite Zahnradpaar F2 oder der Rückwärtsgang R an den Abtrieb gelegt.

Die Antriebsleistung wird im leistungsverzweigten Getriebeabschnitt 20 aufgeteilt mittles Ansteuerung der eingangsseitigen Elektromaschine 16 und ein entsprechender Anteil in elektrische Leistung umgewandelt. Der verbleibende mechanische Anteil wird durch die Eingangswelle 12 geleitet bzw. verbleibt in dieser. Die elektrische Leistung wird mittels der Getriebesystemsteuerung 40 kontrolliert und die ausgangsseitige Elektromaschine 18 angesteuert und mit elektrischer Leistung versorgt. Durch die Kontrolle von Strom und Spannung wird das erzeugte Drehmoment und die Drehzahl beeinflusst, so dass sich mit der Einwirkung des modulierenden Rings 56 und des inneren Rotors 52 eine abgehende Drehzahl und ein abgehendes Drehmoment am modulierenden Ring 56 einstellt.

Der Anteil an verbleibender Leistung in der Eingangswelle wird an die Zapfwelle geleitet, während der weitere Anteil an das Schaltgetriebe geleitet wird.

Zu einem Schaltzeitpunkt, bei entsprechendem Ansteuern durch die Getriebesystemsteuerung erfolgt ein Schließen einer der Lastschaltkupplungen für F1 oder F2, während die jeweils andere Lastschaltkupplung geöffnet wird. Gleichzeitig erfolgt ein Umschalten des Kopplungselements auf der Ausgangswelle 14. Durch den Wechsel des Leistungspfades und der daraus resultierenden Drehzahl sowie dem Drehmoment, würde ohne die Erfindung das Getriebesystem eine Änderung des Trägheitsmoments, so dass diese Änderung von der Bedienperson spürbar ist. Gleichzeitig erfährt das Fahrzeug eine Geschwindigkeitsänderung.

Um dies zu verhindern ist erfindungsgemäß vorgesehen, dass gleichzeitig mit den Schaltvorgängen im Schaltgetriebe 30 eine Anpassung der elektrischen Antriebsleistung erfolgt, derart, dass durch die Getriebesystemsteuerung 40 eine Änderung der Erregerfrequenz der Wicklungen im äußeren Stator 54 der magnetisch elektrischen Umlaufgetriebestufe 54 erfolgt. Die Änderung selbst verursacht kein Drehmoment oder Drehzahländerung, so dass die Veränderung des Trägheitsmoments des Getriebesystems sehr klein gehalten wird. Durch diese Verringerung durchläuft das Fahrzeug keine wahrnehmbare Geschwindigkeitsänderung.

Das Eingangsmoment liegt über die Eingangswelle 12 gleichzeitig an der ersten Elektromaschine 16 und an dem inneren Rotor 52 an. Die erste Elektromaschine 16 wandelt dieses in elektrische Leistung um, wobei die Ansteuerung über die Getriebesystemsteuerung 40 erfolgt. Die elektrische Leistung wird über die zweite Elektromaschine 18 mit einem äußeren Stator 54 abgegeben. Durch eine Änderung der Erregerfrequenz können unterschiedliche Drehzahlen in der magnetisch elektrischen Umlaufgetriebestufe eingestellt werden. Die anliegende Leistung am inneren Rotor 52, als auch die anliegende Leistung am äußeren Stator 54 bedingt die sich anstellende Leistung am modulierenden Ring 56. Die Leistung wird über den modulierenden Ring 56 an das Schaltgetriebe 30 abgegeben und durch Schalten der jeweiligen Kupplungen über die Zahnradpaare F1, F2 oder R geleitet.

Insgesamt ist das Getriebesystem in der Lage, am Schaltzeitpunkt den sich einstellenden Impuls ein gleichzeitiges Ändern der Drehzahl in der magnetisch elektrischen Umlaufgetriebestufe 50 auszugleichen und einen harmonischen, ruckfreien Betrieb während Schaltvorgängen zu erhalten.

Das Getriebesystem 10 kann gleichzeitig das rein elektrische Anfahren ermöglichen, da keine mechanische Verbindung zwischen dem Antrieb und dem Abtrieb besteht. Durch das Vorhalten von Batteriespeicher und der Einspeisung von zusätzlicher elektrischer Energie in die zweite Elektromaschine 18 kann so ein reines elektrisches Anfahren umgesetzt werden. Dies erfolgt im Modul zum seriell elektrischen Anfahren 70. Dies ist besonders von Vorteil bei einer hohen Anhängelast, die bei geringen Fahrgeschwindigkeiten normalerweise eine starke Untersetzung erfordert, um anzufahren.

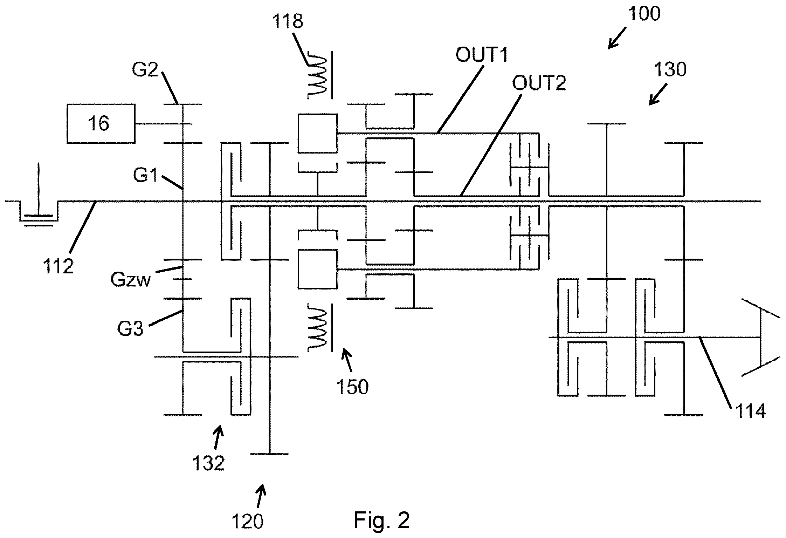

Figur 2 beschreibt ein bekanntes leistungsverzweigtes Getriebesystem aus dem Stand der Technik, das einen variablen Zweig aufweist mit zwei Ausgängen 1 und 2.

Die Antriebsleistung wird über die Eingangswelle 112 zu einem ersten Zahnrad G1 geleitet und mittels der weiteren Zahnräder G2 und G_{zw} bzw. G3 jeweils an eine erste Elektromaschine 116 und an einen Rückwärtsgang 132 geleitet.

Der variable Leistungsanteil wird zu einer zweiten Elektromaschine 118 elektrisch übertragen und mittels einer magnetische elektrischen Umlaufgetriebestufe 150 wieder mit der mechanischen Leistung vereint. Im Unterschied zur vorliegenden Erfindung weist das Getriebesystem nach dem Stand der Technik zwei Ausgänge OUT1 und OUT2 auf, die je nach Anwendung mittels einer Lastschaltkupplung mit dem Abtrieb verbunden werden können. Daran anschließend wird die Antriebsleistung durch ein Schaltgetriebe 130 geleitet, wobei mittels zwei Kupplungen unterschiedliche Übersetzungen festgelegt werden.

Die Lösung mittels zwei Ausgängen nach dem Leistungsverzweigten Getriebe ermöglicht das Umschalten der Ausgänge zeitgleich zum Umschalten der Lastschaltkupplungen im Schaltgetriebe 130. Hierdurch wird zusammen mit der Änderung der Drehzahl und des Drehmoments im Schaltgetriebe 130 die Drehzahl und das Drehmoment am Ausgang des leistungsverzweigen Getriebeabschnitts 120 geändert. Dies führt zu einem Ausgleich des Impulses im Schaltzeitpunkt. Im Unterschied zur vorliegenden Erfindung ist der Aufbau des Getriebesystems 100 wesentlich komplexer. Es müssen zwei Ausgänge des leistungsverzweigten Getriebeabschnitts vorgehalten werden, zusammen mit zwei Lastschaltkupplungen und zwei zusätzlichen Planetenstufen. Parallel ist die Steuerung des Getriebesystems 130 so ausgelegt, dass nur zwischen zwei unterschiedlichen Drehzahlverhältnissen umgeschaltet werden kann. Insgesamt führt dies zu einer höheren Fertigungskomplexität, einer höheren Bauteilanzahl und einem gesteigerten Gewicht.

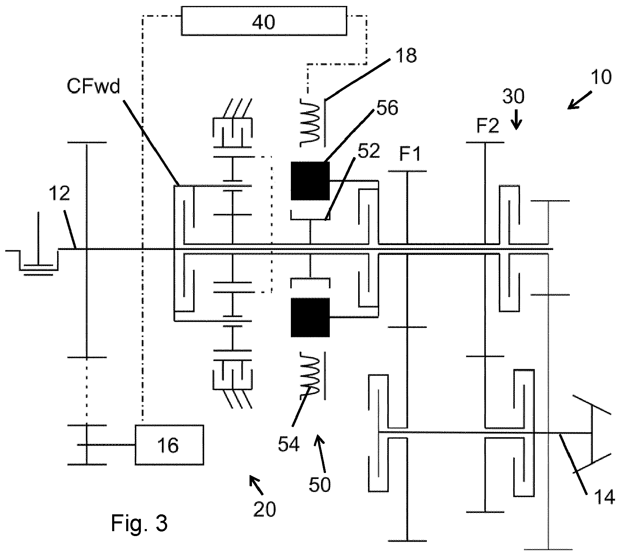

Figur 3 zeigt ein weiteres Ausführungsbeispiel des erfindungsgemäßen Getriebesystems. Dabei wird die erste Elektromaschine 16 über eine Welle eines Zahnrades angetrieben, das mit einer konstanten Übersetzung mit dem Eingangsdrehmoment versorgt wird. Von der Eingangswelle 12 wird die Antriebsleistung in den Planetenträger eines Umlaufgetriebes eingeleitet. Dieses hat einen verblockbaren Außenring und weist eine Lastschaltkupplung auf, mit welcher der Planetenträger mit der Sonne koppelbar ist. Der Ausgang des Planetengetriebes erfolgt ebenfalls über die Sonne, so dass die Antriebsleistung weiter parallel über die Eingangswelle 12 und die Sonnenwelle erfolgt. Weiter unterhalb im Leistungspfad erfolgt die Einleitung des variablen Leistungsanteils mittels der zweiten Elektromaschine 18 und einem weiteren Sonnenrad der magnetisch elektrischen Umlaufgetriebestufe 50, wobei der modulierbare Ring 56 mittels einer weiteren Lastschaltkupplung mit dem inneren Rotor in der Funktion als Sonnenrad koppelbar ist. Hierbei erfolgt zwischen der ersten und zweiten Elektromaschine 16 und 18 eine Regelung des variablen Leistungsanteils. Ein anschließendes Schaltgetriebe 30 mit einer weiteren parallelen Welle zum Abtrieb schließt sich an. Das Schaltgetriebe verfügt über zwei Zahnradpaarungen F1 und F2 die mittels Lastschaltkupplungen mit der Sonnenwelle koppelbar sind. Die Eingangswelle 12 dient der Versorgung der Zapfwelle oder PTO. Zusätzlich ist ein weiterer untersetzter Gang als Langsamfahrgang oder Creep vorgesehen.

Der Rückwärtsgang im Getriebesystem 10 wird über das Schließen oder Öffnen der Lastschaltkupplung C_{Fwd} bereitgestellt, wodurch eine Drehrichtungsumkehr am Sonnenrad bzw. an der Sonnenwelle des Planetengetriebes erfolgt.

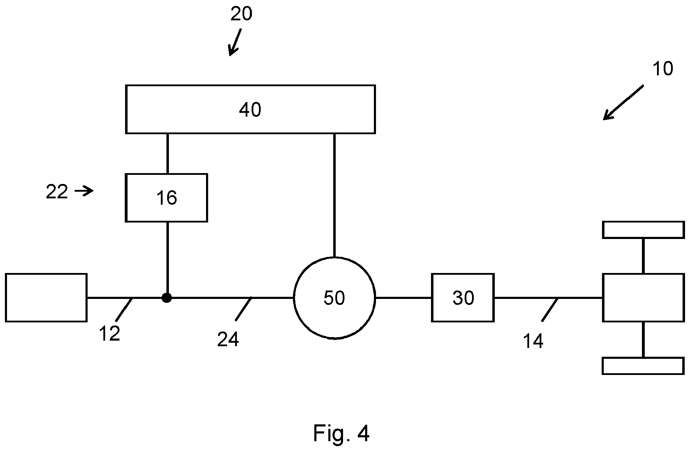

Figuren 4 bis 12 zeigen einen schematischen Aufbau von weiteren Ausführungen des erfindungsgemäßen Getriebesystems 10. Die einzelnen Komponenten entsprechen in der Ausbildung denen der Figuren 1 und 3.

Figur 4 zeigt ein erfindungsgemäßes Getriebesystem 10 nach Figur 1, wobei die Ausführung keinen gesonderten Rückwärtsgang aufweist. Das Antriebsmoment wird aufgeteilt zwischen dem mechanischen Getriebezweig 24 und dem variablen Getriebezweig 22, der aus der ersten und zweiten Elektromaschine 16 und 18 besteht. Die zweite Elektromaschine 18 ist Bestandteil der magnetisch elektrischen Umlaufgetriebestufe 50. Im Leistungspfad folgend ist das Schaltgetriebe 30 ausgebildet. Von diesem ausgehend wird die Antriebsleistung in eine oder mehrere Achsen des Fahrzeugs und abschließend an den Abtrieb geleitet.

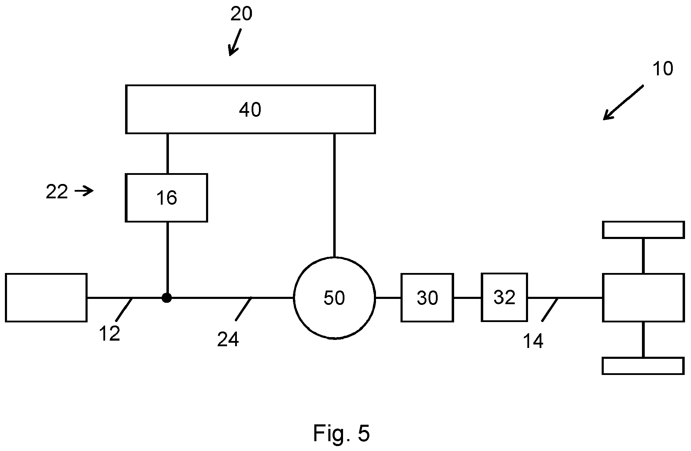

Figur 5 zeigt eine Ausführung, wobei das Getriebesystem 10 zusätzlich einen Rückwärtsgang 32 aufweist, der im Leistungspfad zwischen dem Schaltgetriebe 30 und den Fahrzeugachsen vorgesehen ist.

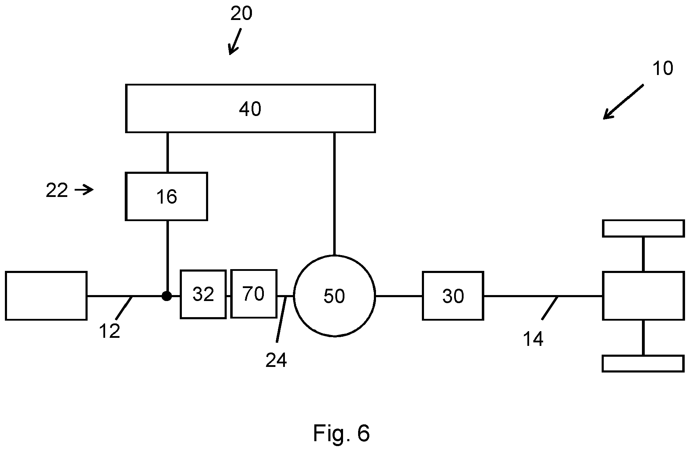

Figur 6 zeigt eine Ausbildung, bei welcher der Rückwärtsgang 32 im Bereich zwischen der ersten Elektromaschine 16 und der magnetisch elektrischen Umlaufgetriebestufe 50 im Leistungspfad ausgebildet ist. Zusätzlich ist ein Modul zum seriell elektrischen Anfahren 70 im Leistungspfad vorgesehen, das ein Anfahren des Fahrzeugs ohne direkte mechanische Kopplung des Antriebes mit dem Abtrieb ermöglicht.

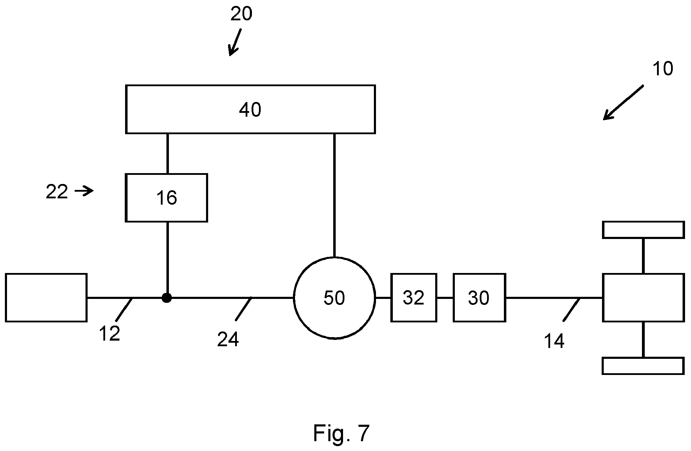

Figur 7 beschreibt eine Ausführung, in welcher der Rückwärtsgang 32 im Leistungspfad zwischen der magnetisch elektrischen Umlaufgetriebestufe 50 und dem Schaltgetriebe 30 ausgebildet ist.

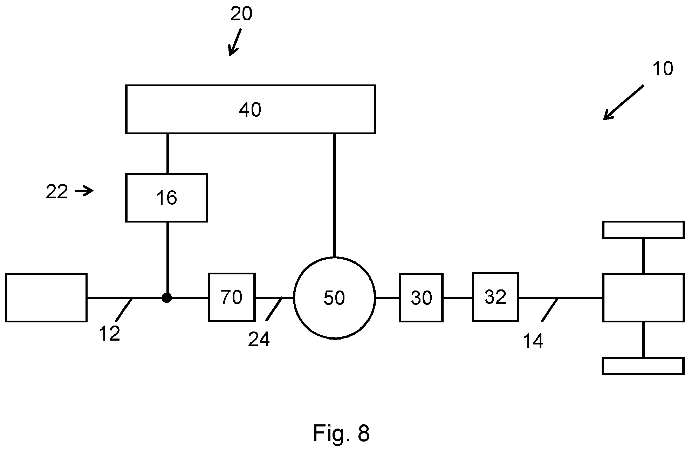

Figur 8 zeigt eine Ausführung, in welcher das Modul zum seriell elektrischen Anfahren 70 im Leistungspfad zwischen der ersten Elektromaschine 16 und der magnetisch elektrischen Umlaufgetriebestufe 50 vorgesehen ist. Weiterhin ist der Rückwärtsgang 32 zwischen dem Schaltgetriebe 30 und den Fahrzeugachsen ausgebildet.

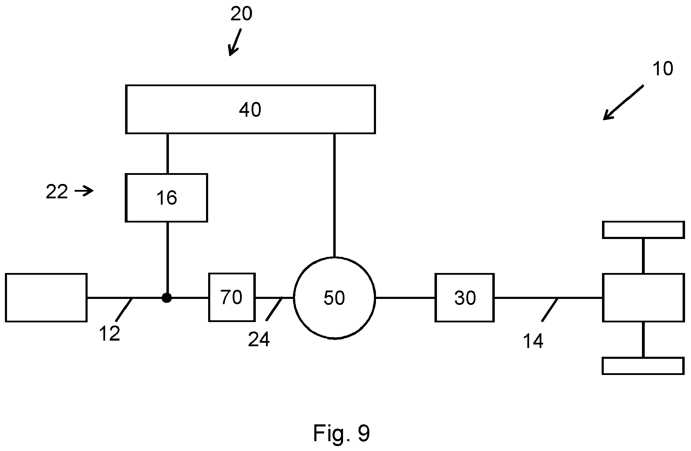

Figur 9 beschreibt eine Ausführung mit dem Modul zum seriell elektrischen Anfahren 70 gemäß Figur 8, wobei auf einen Rückwärtsgang verzichtet wurde. Dieser wird über die magnetisch elektrische Umlaufgetriebestufe 50 ausgeführt, so dass eine Drehrichtungsumkehr am Ausgang der magnetisch elektrischen Umlaufgetriebestufe 50 anliegt.

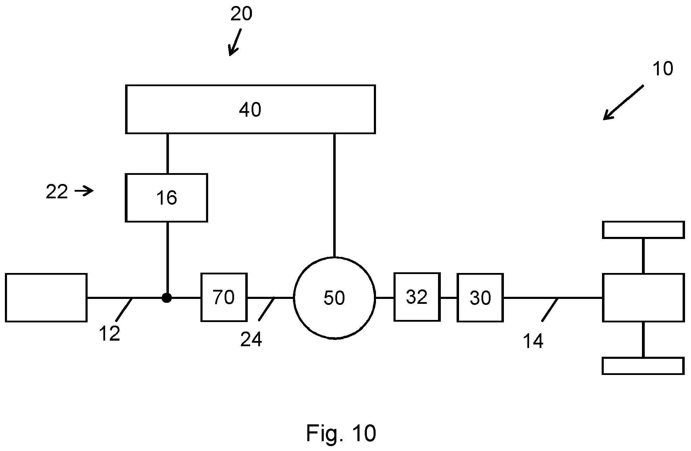

Figur 10 zeigt eine weitere Ausführung, wobei das Modul zum seriell elektrischen Anfahren 70 im Leistungspfad zwischen der ersten Elektromaschine 16 und der magnetisch elektrischen Umlaufgetriebestufe 50 ausgebildet ist. Der Rückwärtsgang 32 ist im Leistungspfad zwischen der magnetisch elektrischen Umlaufgetriebestufe 50 und dem Schaltgetriebe 30 vorgesehen.

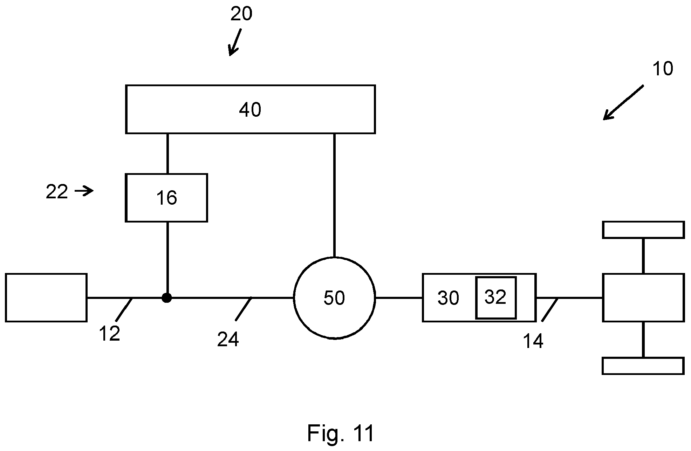

Figur 11 zeigt eine Ausführung, bei welcher der Rückwärtsgang 32 innerhalb des Schaltgetriebes 30 ausgebildet ist.

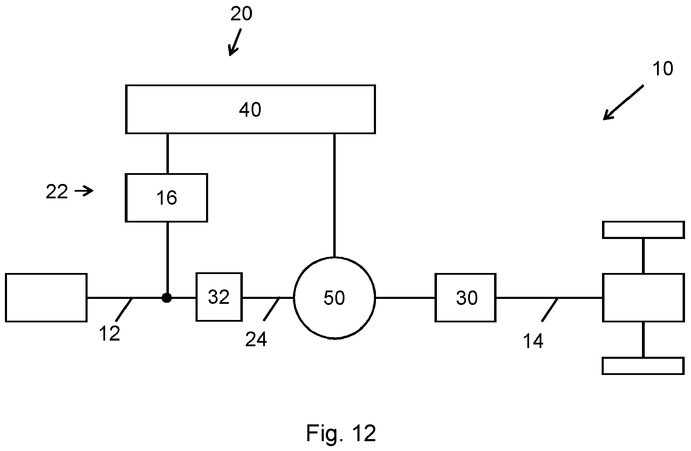

Figur 12 zeigt eine Ausführung mit dem Rückwärtsgang 32 im Leistungspfad zwischen der ersten Elektromaschine 16 und der magnetisch elektrischen Umlaufgetriebestufe 50.

## Patentansprüche

1. Getriebesystem (10)
geeignet für Betrieb mit einer Antriebsmaschine, aufweisend
eine Eingangswelle (12) für die Antriebsleitung,
wenigstens eine Ausgangswelle (14) für die Abgabe an einen Antrieb,
einen leistungsverzweigten Getriebeabschnitt (20),
ein Schaltgetriebe (30),
eine Getriebesystemsteuerung (40),
wobei der leistungsverzweigte Getriebeabschnitt (20) wenigstens einen variablen Getriebezweig (22) und einen mechanischen Getriebezweig (24) aufweist, und
der variable Getriebezweig (22) eingangs- und ausgangsseitig jeweils wenigstens eine erste und zweite Elektromaschine (16, 18) für den Generator und Motorbetrieb aufweist, die elektrisch miteinander verbunden sind,
wobei die Antriebsleistung durch den mechanischen und variablen Getriebezweig (22, 24) aufgeteilt und geleitet wird, und
mit einer eingangsgekoppelten magnetisch elektrischen Umlaufgetriebestufe (50), die den variablen Getriebezweig (22) und mechanischen Getriebezweig (24) zusammenführt, mit
einem inneren Rotor (52), einem äußeren Stator (54) und einem modulierenden Ring (56), und
die magnetisch elektrische Umlaufgetriebestufe (50) derart von der zweiten Elektromaschine (18) ansteuerbar ist, dass die Ausgangswelle (14) des Getriebesystems (10) entgegen der Drehrichtung an einer Eingangswelle (12) rotiert, wodurch ein Vorwärts- und Rückwärtsbetrieb des Getriebesystems (10) durchführbar ist.

2. Getriebesystem (10) nach Anspruch 1, **dadurch gekennzeichnet, dass** die magnetisch elektrische Umlaufgetriebestufe (50) derart von der zweiten Elektromaschine (18) angesteuert wird, dass eine Ausgangswelle der magnetisch elektrischen Umlaufgetriebestufe (50) in Gegenrichtung zur Eingangswelle (12) des Getriebesystems (10) rotiert.

3. Getriebesystem (10) nach Anspruch 1, **dadurch gekennzeichnet, dass** ein zusätzliches Modul zur Drehrichtungsumkehr (60) zwischen der ersten Elektromaschine (16) und der magnetisch elektrischen Umlaufgetriebestufe (50) im Leistungsfluss vorgesehen ist.

4. Getriebesystem (10) nach Anspruch 1, **dadurch gekennzeichnet, dass** ein Gang des Schaltgetriebes (30) ein zusätzlicher Rückwärtsgang (32) ist.

5. Getriebesystem (10) nach Anspruch 1, **dadurch gekennzeichnet, dass** ein zusätzliches Modul zur Drehrichtungsumkehr (60) zwischen der magnetisch elektrischen Umlaufgetriebestufe (50) und dem Schaltgetriebe (30) im Leistungsfluss vorgesehen ist.

6. Getriebesystem (10) nach einem der vorangehenden Ansprüche, wobei ein zusätzliches Modul zum seriell elektrischen Anfahren (70) im Leistungsfluss vorgesehen ist.
6. Getriebesystem (10) nach einem der vorangehenden Ansprüche, **dadurch gekennzeichnet, dass** das Modul zum seriell elektrischen Anfahren (70) zwischen der Eingangswelle (12) des Getriebesystems (10) und der magnetisch elektrischen Umlaufgetriebestufe (50) im Leistungsfluss vorgesehen ist.

7. Getriebesystem (10) nach einem der vorangehenden Ansprüche, **dadurch gekennzeichnet, dass** das Modul zum seriell elektrischen Anfahren (70) im Leistungsfluss zwischen der ersten Elektromaschine (16) und der magnetisch elektrischen Umlaufgetriebestufe (50) vorgesehen ist.

8. Getriebesystem (10) nach Anspruch 3, **dadurch gekennzeichnet, dass** das Modul zum seriell elektrischen Anfahren (70) im Leistungsfluss zwischen dem Modul zur Drehrichtungsumkehr (60) und der magnetisch elektrischen Umlaufgetriebestufe (50) vorgesehen ist.
